Europäisches Patentamt

European Patent Office

Office européen des brevets

(11) Publication number: **0 073 005**
**B1**

(12) **EUROPEAN PATENT SPECIFICATION**

(45) Date of publication of patent specification: **16.07.86**

(21) Application number: **82107485.3**

(22) Date of filing: **17.08.82**

(51) Int. Cl.⁴: **H 01 J 29/70, H 01 J 29/56**

(54) **Color cathode ray tube device.**

(30) Priority: **18.08.81 JP 129707/81**

(43) Date of publication of application:
**02.03.83 Bulletin 83/09**

(45) Publication of the grant of the patent:
**16.07.86 Bulletin 86/29**

(84) Designated Contracting States:
**DE FR GB**

(56) References cited:
**US-A-3 440 468**
**US-A-3 763 452**
**US-A-3 906 418**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Nosaka, Eisho c/o Mitsubishi Denki K.K.**
**Kyoto Works, No.1, Babazusho Nagaokakyo-shi**
**Kyoto (JP)**

(74) Representative: **Lehn, Werner, Dipl.-Ing. et al**
**Hoffmann, Eitle & Partner Patentanwälte**
**Arabellastrasse 4 (Sternhaus)**
**D-8000 München 81 (DE)**

Courier Press, Leamington Spa, England.

# Description

The present invention relates to a color cathode ray tube (CRT) device of the in-line type.

In conventional color CRT devices of the in-line type (see e.g. US—A—3 906 418), the distribution of the magnetic field generated by a deflection yoke is made suitably non-uniform, and a magnetic field control element incorporated in an end portion of the electron gun together with the suitable non-uniform magnetic field distribution converge three in-line electron beams onto an image surface of the tube. However, possible variations of the magnetic field generated by the deflection yoke, the magnetic field distribution of the in-line arrangement of the three electron beams emitted from the electron gun, of the electron beam and the deflection yoke in combination as well as possible assembly errors in mass-production have caused precise convergence of the three electron beams throughout the surface of the image plane to be difficult. In general, the amount of convergence error to be further corrected in a mass-produced color CRT device of this type is about 0.5—1.0 mm.

Particularly when a color CRT device of the in-line type is used as a display device of a computer terminal, color deviations around peripheral portions of the image plane cause characters displayed on the CRT image plane in different colors to deviate from each other and thus the quality of the CRT device as a display medium is degraded.

In order to correct this convergence error and hence eliminate the color deviation problem around the periphery of the tube surface, it has been proposed to arrange the dynamic convergence component at the outer periphery of a neck portion of the color CRT. This proposal has been realized in various manners which are unsatisfactory for various reasons.

An object of the present invention is to provide a color cathode ray tube device of the in-line type in which the arrangement of the dynamic convergence component with respect to the electron gun is optimized to improve the correction sensitivity of the component to thereby minimize the electric power required to realize the correction.

According to the invention, there is provided a color cathode ray tube device of the in-line type, comprising: an electron gun with a main electron lens gap; a deflection yoke; a static convergence component and a dynamic convergence component; characterised in that said dynamic convergence component is disposed with its center plane orthogonal to the axis of the cathode ray tube and within a range of distance 3d along said axis on either side of the center plane of the main electron lens gap of width d, and located in a region between said deflection yoke and said static convergence component.

For a better understanding of the invention, and to show how the same may be carried into effect, reference will now be made, by way of example, to the accompanying drawings, in which:

Figure 1 is a schematic illustration of the neck portion of a conventional color CRT device;

Figures $2A_1$, $2A_2$, $2B_1$, and $2B_2$ illustrate the dynamic convergence component;

Figure 3 is a graph showing the relation between the setting position of the dynamic convergence component and the electric power for convergence correction;

Figure 4 illustrates the magnetic field distribution when the dynamic convergence component is disposed within a magnetic field produced in the deflection yoke; and

Figure 5 is a schematic illustration of the neck portion of an example of the color CRT device according to the present invention.

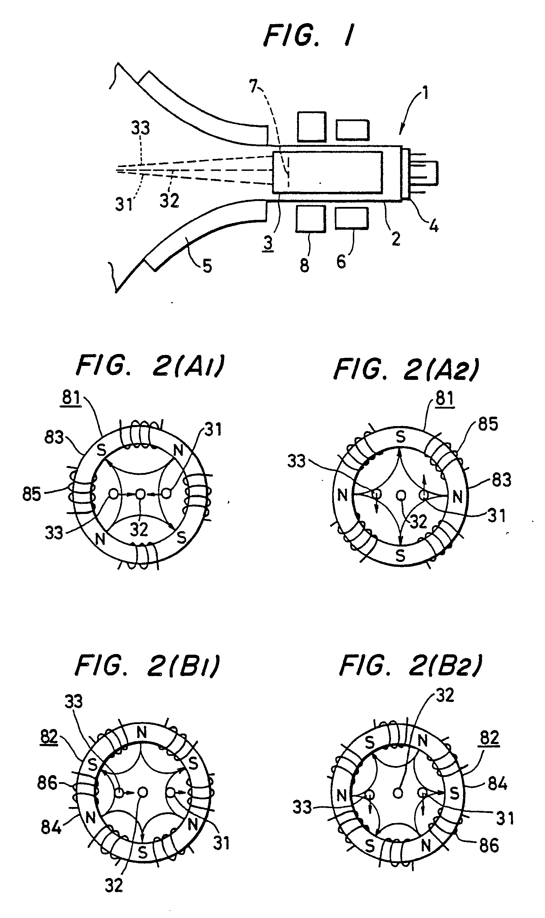

Figure 1 is a schematic illustration of the neck portion of a color CRT device 1 of the in-line type, which is constructed according to a typical example of a known proposal. In Figure 1, a three beam electron gun 3 for producing three in-line electron beams 31, 32 and 33 is incorporated in the neck portion 2. Various voltages are applied through a base portion 4 to the electron gun 3 to cause the latter to emit the beams 31, 32 and 33. These electron beams are passed through a deflection yoke 5 which produces a specific non-uniform magnetic field distribution and are deflected horizontally and vertically towards given points on the image surface.

A static convergence correction magnetic field generating component 6 (referred to as a static convergence component hereinafter) composed of two, four and six pole magnets is provided around the outer periphery of the electron gun 3, in which the three electron beams 31, 32 and 33 are corrected in convergence error around a central portion of the image plane and converged to a point in the central area by regulating the magnetic field strengths of two four-pole magnets and two six-pole magnets. Color purity correction at the image plane is also performed by regulating the magnetic field strength of the two-pole magnet. The three beams 31, 32 and 33 to be converged to a point in the central area of the image plane pass through the magnetic field produced by the deflection yoke 5 and are deflected horizontally and vertically. It is required that the three beams be convergeable at any point whether at peripheral or central areas of the image plane.

In order to realize the above, the magnetic field produced by the deflection yoke 5 should be distributed non-uniformly in a specific horizontal and vertical pattern and a coma correction should be provided. The coma correction is performed by a coma correcting magnetic field control component (referred to as coma control component hereinafter) 7 provided at an end of the electron gun 3 so that a deflection sensitivity correction of the center beam 32 and the side beams 31 and 33 may be performed.

In order to further improve the convergence precision of the beams 31, 32 and 33 in the peripheral areas of the image plane, the side beams 31 and 33 are corrected by dynamic convergence component 8 provided between the deflection yoke 5 and the static convergence component 6 so that these beams 31 and 33 are overlapped on the central beam 32. Therefore, the amount of convergence to be corrected can be reduced to an amount smaller than 0.5 mm.

The dynamic convergence component 8 is composed of two four-pole magnetic field generating elements 81 and two six-pole magnetic field generating elements 32 as shown in Figures 2A and 2B, respectively. The elements 81 are composed of a ferrite core ring 83 and two sets of four coils 85 would at equi-distance positions on the ring 83, the sets of coils 85 being offset in phase by 45° from each other as shown in Figure 2A, and the elements 42 are composed of a similar ferrite core ring 84 and two sets of six coils 86 wound equi-angularly on the ring 84, the sets of the coils 86 being off-set in phase by 30° from each other. It should be noted that the core ring 84 may be eliminated and instead, the core ring 83 may be used concurrently. The convergence correction is performed by varying the magnetic field strengths produced thereby by regulating the currents flowing through the coils 85 and coils 86, respectively.

However, the correction sensitivity of the element 82 of the dynamic convergence component 8 is very low and therefore a large amount of current must be supplied to the coils 85 causing the correction cost to be very high.

Furthermore, the heat generated in the coils 86 due to the large amount of current flowing therethrough causes a drift in the dynamic convergence correction.

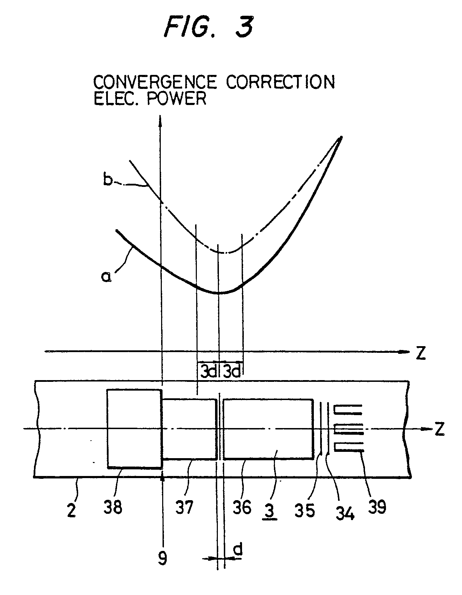

In Figure 3, the relation between the position of the six-pole field generating element 82 of the dynamic convergence component 8 relative to the electron gun 3 and the electric power for convergence correction is shown. The electron gun 3, which is of the general bipotential type, is composed of three in-line cathodes 39, a first grid 34, a second grid 35, a third grid electrode 36, a fourth grid electrode 37 and a shield cup electrode 38. It should be noted that the so-called multi-stage convergence type electron gun which has been widely used recently is basically similar to the gun shown in Figure 3. That is, the only difference between the guns is that a single prefocussing lens is provided in front of a main electric lens located between the third and fourth electrodes 36 and 37 in the bipotential type gun, while a plurality of various prefocussing lenes are arranged in the multi-stage type gun. In this connection, the character Z in Figure 3 depicts the axis of the tube.

Generally, the coma control component 7 (Figure 1) is provided in a border portion 9 between the fourth electrode 37 and the shield cup electrode 38. In Figure 3, a curve a shows the variation of the electric power required for convergence correction when no coma control component 7 is provided. As shown in Figure 3, the electric power required for the dynamic convergence component 8 becomes a minimum around the main lens of the gun 3, located between electrodes 37 and 37, regardless of the presence of the coma control component 7. When the component 7 is provided, while the position at which the electric power for effecting correction is minimum is unchanged, the minimum value is increased. The minimum value of the power for correction depends upon the size of the component 7 as well as the relative distance from the component 8 to the component 7.

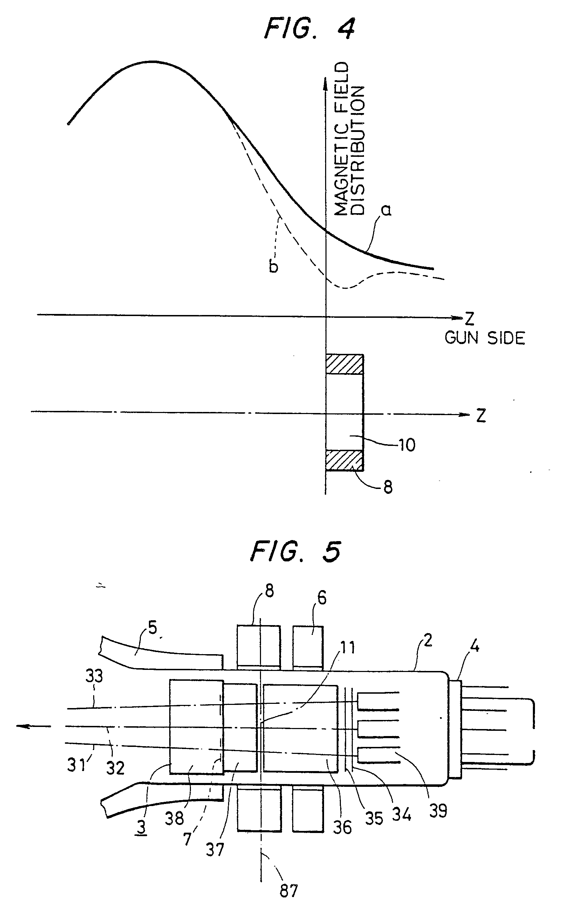

Figure 4 shows the vertical component distribution of the deflection field in which curve a shows the field distribution when there is no dynamic convergence component 8 within the deflection field and curve b shows that when the dynamic convergence component 8 is provided within the deflection field. As is clear from Figure 4, when the component 8 is provided, the vertical field strength on the gun side is remarkably reduced. In this connection, it should be noted that the variation in the horizontal field distribution is slightly affected by the presence of the component 8. The reason for this is that a ferrite core ring is used as the dynamic convergence component 8 on which the coils are wound to produce the four-pole magnetic fields and six-pole magnetic fields, and the gun side component of the vertical magnetic field is shunted by the ring core. Therefore, when the dynamic convergence correction element 8 is provided, the size and configuration of the component 7 should be increased for magnetic field control as compared with the case when the component 8 is not used. Consequently, the electric power required by the dynamic convergence component 8 is undesirably increased. In order to resolve this problem, it is necessary to separate the coma control component 7 from the dynamic convergence component 8. That is, as shown in Figure 4, the component 7 should be arranged outside the dynamic convergence component 8.

Figure 5 shows an example of the arrangement of the dynamic convergence component 8, according to the present invention. That is, the dynamic convergence component 8 producing the four- and six-pole magnetic fields is disposed on the outer periphery of the neck portion 2 and between the deflection yoke 5 and the static convergence component 6. The dynamic convergence component 8 is disposed in the main lens portion exhibiting the minimum power for correction, as shown in Figure 3, i.e., in the electron lens portion composed of the third and fourth electrodes 36 and 37. The coma control component 7 is disposed in a plane orthogonal to the axis Z and is positioned in the side of the yoke 5 outside of a region 10 (Figure 4) defined by the dynamic convergence component 8. Therefore, it is possible to improve the correction sensitivity of the dynamic convergence component 8 and reduce the power for correction without undesirably increasing the size of the coma control component 7.

In the above-described embodiment, the dynamic convergence component 8 is set exactly at the point where the power for correction becomes a minimum. In this connection, it is preferable to set the center plane 87 (Figure 5) of the component 8 exactly on the center plane of the main electron lens gap 11 between the fourth electrode 37 disposed closest to the image surface and the third electrode 36 facing the fourth electrode. However, the center plane 87 of the dynamic convergence element 8 may be set within a range of 3d about a reference plane containing the center of the gap 11, where d is the width of the gap 11 between the electrodes 36 and 37, which may be, for example, 1 mm.

Further, although in the above embodiment, an electron gun 3 of the bipotential type is described, the invention is likewise applicable with other multi-stage converging type guns. That is, in a multi-stage converging gun, the electron beams emitted by the cathode 39 are converged by successive electric lenses, and therefore, the last electric lens may be considered as the "main" electric lens referred to above.

As mentioned hereinbefore, according to the present invention, the arrangement of the dynamic convergence component with respect to the electron gun is optimized so that the correction sensitivity of the dynamic convergence component is improved and the electric power for convergence correction is reduced.

## Claims

1. A color cathode ray tube device of the in-line type, comprising: an electron gun (3) with a main electron lens gap (11), a deflection yoke (5); a static convergence component (6) and a dynamic convergence component (8); characterised in that said dynamic convergence component (8) is disposed with its center plane (87) orthogonal to the axis (Z) of the cathode ray tube and within a range of distance 3d along said axis on either side of the center plane of the main electron lens gap (11) of width d, and located in a region between said deflection yoke (5) and said static convergence component (6).

2. A color cathode ray tube device as claimed in claim 1 wherein a coma control component (7) is disposed outside the axial width of said dynamic convergence component (8).

3. A color cathode ray tube device as claimed in claim 1 or 2 wherein said dynamic convergence component (8) comprises a ring core (83) and a plurality of coils (85) wound thereon, said coils being adapted to produce four-pole correcting fields and six-pole correcting fields, respectively.

4. A color cathode ray tube device as claimed in any one of claims 1 to 3 wherein said dynamic convergence component (8) is disposed within said range at a location minimizing an amount of electric power required for convergence correction.

5. A color cathode ray tube device as claimed in any one of claims 1 to 4 wherein said gap (11) is located between a rear surface of a final electrode of said tube device and a front surface of the next preceding electrode.

## Patentansprüche

1. Farb-Kathodenstrahlröhren-Anordnung vom In-Line-Typ umfassend eine Elektronenkanone (3) mit einem Haupt-Elektronen-Linsen-Spalt (11), einem Ablenkspulenjoch (5), einem statischen Konvergenzglied (6) und einem dynamischen Konvergenzglied (8), dadurch gekennzeichnet, daß das dynamische Konvergenzglied (8) mit seiner Mittenebene (87) orthogonal zur Achse (Z) der Kathodenstrahlröhre und innerhalb eines Abstandbereiches (3d) längs dieser Achse auf jeder Seite der Mittenebene des Haupt-Elektronen-Linsen-Spaltes (11) von der Breite (d) angeordnet ist sowie in einem Bereich zwischen dem Ablenkspulenjoch (5) und den ersten statischen Konvergenzglied (6) vorgesehen ist.

2. Farb-Kathodenstrahlröhren-Anordnung nach Anspruch 1, dadurch gekennzeichnet, daß ein Koma-Steuerglied (7) außerhalb der axialen Breite des dynamischen Konvergenzglieds (8) angeordnet ist.

3. Farb-Kathodenstrahlröhren-Anordnung nach Anspruch 1 oder 2, dadurch gekennzeichnet, daß das dynamische Konvergenzglied (8) einen Ringkern (83) und eine Vielzahl von Spulen (85) aufweist, die um diesen gewickelt sind, wobei die Spulen jeweils in der Lage sind, jeweils vier-polige Korrekturfelder und sechs-polige Korrekturfelder zu erzeugen.

4. Farb-Kathodenstrahlröhren-Anordnung nach einem der Ansprüche 1 bis 3, dadurch gekennzeichnet, daß das dynamische Konvergenzglied (8) an einer Stelle innerhalb des Bereiches vorgesehen ist, um den Wert der elektrischen Leistung, die für die Konvergenzkorrektur erforderlich ist, zu minimieren.

5. Farb-Kathodenstrahlröhren-Anordnung nach einem der Ansprüche 1 bis 4, dadurch gekennzeichnet, daß der Spalt (11) zwischen einer rückseitigen Oberflache einer End-Elektrode der Röhrenanordnung und einer frontseitigen Oberfläche der nächstvorhergehenden Elektrode angeordnet ist.

## Revendications

1. Dispositif à tube à rayons cathodiques couleur du type axé, comprenant: un canon à électrons (3) avec un espace de lentille électronique principale (11), une bobine de déviation (5), un composant statique (6) et un composant de convergence dynamique (8); caractérisé en ce que le composant de convergence dynamique (8) est disposé avec son plan central (87) orthogonal par rapport à l'axe (Z) du tube à rayons cathodiques et à l'intérieur d'un intervalle de distance 3d le long de l'axe de chaque côté du plan central de l'espace de lentille électronique principale (11) de largeur d, et placé dans une région située entre la bobine de déviation (5) et le composant de convergence statique (6).

2. Dispositif à tube à rayons cathodiques couleur selon la revendication 1, dans lequel un composant de réglage de coma (7) est disposé à l'extérieur de la largeur axiale du composant de convergence dynamique (8).

3. Dispositif à tube à rayons cathodiques couleur selon l'une quelconque des revendications 1 et 2, dans lequel le composant de convergence dynamique (8) comprend un noyau annulaire (83) et un ensemble de bobinages (85) bobinés sur celui-ci, les bobinages étant agencés pour produire des champs de correction quadripolaires et des champs de correction hexapolaires, respectivement.

4. Dispositif à tube à rayons cathodiques couleur selon l'une quelconque des revendications 1 à 3, dans lequel le composant de convergence dynamique (8) est disposé à l'intérieur de l'intervalle situé à un emplacement réduisant au minimum la quantité de puissance électrique nécessaire pour une correction de convergence.

5. Dispositif à tube à rayons cathodiques couleur selon l'une quelconque des revendications 1 à 4, dans lequel l'espace (11) est placé entre une surface arrière d'une électrode finale du dispositif à tube et une surface avant de l'électrode la précédant immédiatement.

## FIG. 1

## FIG. 2(A1)

## FIG. 2(A2)

## FIG. 2(B1)

## FIG. 2(B2)

0 073 005

# FIG. 3

CONVERGENCE CORRECTION
ELEC. POWER

b

a

Z

3d 3d

Z

2   38   37   36  3  35  34  39

9

d

2

## FIG. 4

## FIG. 5